Europäisches Patentamt

European Patent Office

Office européen des brevets

(19)

(11) **EP 0 718 640 A2**

(12) **EUROPÄISCHE PATENTANMELDUNG**

(43) Veröffentlichungstag:
26.06.1996 Patentblatt 1996/26

(51) Int. Cl.⁶: **G01V 1/20**

(21) Anmeldenummer: 95119614.6

(22) Anmeldetag: 13.12.1995

(84) Benannte Vertragsstaaten:
FR GB IT SE

(30) Priorität: 20.12.1994 DE 4445549

(71) Anmelder: STN ATLAS Elektronik GmbH
D-28309 Bremen (DE)

(72) Erfinder:
- **Arens, Egidius, Dipl.-Ing.**
  **D-28832 Achim (DE)**
- **Schmidt-Schierhorn, Helmut**
  **D-28259 Bremen (DE)**
- **Springer, Martin, Dr. rer. nat.**
  **D-27367 Sottrum (DE)**
- **Warhonowicz, Thomas, Dr. rer. nat.**
  **D-28209 Bremen (DE)**

(54) **Schleppantenne**

(57)  Beim Peilen mit einer Schleppantenne werden zur Seitenunterscheidung der Einfallsrichtung empfangener Schallwellen mehrere Wandler (10,20,30,4n) an einem Wandlerort (101,102,...10n) mit Querabstand zur Längsachse der Schleppantenne angeordnet. Die Empfangssignale der Wandler (10,...4n) jedes Wandlerorts (101,...10n) werden zu einem Kardioidensignal zusammengefaßt und daraus eine Richtcharakteristik gebildet, deren Hauptempfangsrichtung nur zu einer Seite der Schleppantenne weist. Diese Wandleranordnung ist sehr aufwendig, da die Anzahl der Wandler mindestens verdoppelt wird. Die Erfindung löst dieses Problem dadurch, daß an jedem Wandlerort (101,...10n) nur ein einziger Wandler (10,...4n) mit Querabstand unter einem vorgebbaren Winkel ($\pi$) zu einer Bezugsachse (200) senkrecht zur Längsachse (300) vorgesehen ist und der Winkel ($\pi$) von Wandlerort zu Wandlerort statistisch variiert. Durch Laufzeitkompensation und Verzögerung sowie Summenbildung der Empfangssignale wird eine schwenkbare oder mehrere Richtcharakterstiken gebildet, deren Hauptempfangsrichtungen zu einer Seite der Schleppantenne weisen und somit eine eindeutige Peilung erlauben.

Fig.1

EP 0 718 640 A2

## Beschreibung

Die Erfindung betrifft eine Schleppantenne mit elektroakustischen Wandlern der im Oberbegriff des Anspruchs 1 genannten Art.

In der Wasserschalltechnik werden Peilanlagen mit vom Wasserfahrzeug nachgeschleppten Schleppantennen großer Länge eingesetzt, um über große Entfernungen Ziele zu detektieren und zu peilen. Die Ausbreitung von Schallwellen ist frequenzabhängig. Zum Erzielen großer Reichweiten wird wegen der geringeren Dämpfung der Schallwellen im tieffrequenten Bereich gepeilt. Die Peilgenauigkeit ist abhängig vom Öffnungswinkel der Richtcharakteristik einer Antenne. Der Öffnungswinkel ist um so größer, je niedriger die Frequenz der empfangenen Schallwellen ist, und um so kleiner, je länger die Antenne ist. Mit Schleppantennen lassen sich Öffnungswinkel realisieren, die auch über große Entfernungen eine Peilung zum Ziel in ausreichender Auflösung gestatten. Mit einem Richtungsbildner werden Empfangssignale von rundum druckempfindlichen, elektroakustischen Wandlern, die in der Schleppantenne angeordnet sind, zu Richtcharakteristiksignalen zusammengefaßt, deren Richtcharakteristiken seitlich zur Schleppantenne in unterschiedliche Richtungen weisen. Die Form der Richtcharakteristiken gestattet jedoch keine Unterscheidung, ob ein aufgefaßtes Ziel rechts oder links von der Schleppantenne liegt.

Eine Seitenkennung ist beispielsweise mit Wandlern in der Schleppantenne möglich, die in einer Vorzugsrichtung empfindlich und nicht rundum empfindlich sind. In der DE-OS 3 151 028 werden je Wandlerort drei Wandler im Dreieck mit Querabstand zur Längsrichtung angeordnet und paarweise zu je einem Kardioidensignal zusammengefaßt, das jeweils zu einer Seite seine höchste Empfangsempfindlichkeit und zur anderen Seite eine Nullstelle aufweist. Der Aufwand mit mehreren Wandlern an einem Wandlerort, die einen Querabstand zur Längsrichtung aufweisen, ist erheblich. Die Schleppantenne wird in ihrem Aufbau wesentlich aufwendiger, komplizierter, störanfälliger und schwerer.

Es ist Aufgabe der vorliegenden Erfindung, eine Schleppantenne der im Oberbegriff des Anspruchs 1 genannten Art zu schaffen, mit der eine eindeutige Peilung möglich ist, ohne daß die Zahl der benötigten Wandler steigt.

Diese Aufgabe wird erfindungsgemäß durch die im Kennzeichenteil des Anspruchs 1 genannten Merkmale gelöst.

Durch den Querabstand, den der Wandler an jedem Wandlerort zur Längsachse aufweist, werden Empfangssignale zum Bilden einer Richtcharakteristik, die zu einer Seite der Schleppantenne ihre Hauptempfangsrichtung aufweist, mit positiven Laufzeiten und für eine Richtcharakteristik zur anderen Seite mit negativen Laufzeiten beaufschlagt, wie es in der DE-OS 39 10 906 für Empfangssignale von Wandlern einer Schleppantenne beschrieben ist, die nicht langgestreckt, sondern durch Fahrzeugmanöver örtlich von der Fahrtrichtung eines schleppenden Wasserfahrzeugs abweicht, so daß die Wandler einen Querabstand zur Fahrtrichtung und somit Längsrichtung aufweisen. Der Vorteil der erfindungsgemäßen Schleppantenne nach Anspruch 1 besteht darin, daß auch bei einer schnurgeraden Lage der Schleppantenne eine Seitenkennung gesichert ist, so daß ohne Zeitverzug ständig eine eindeutige Peilung gewährleistet ist. Diese Präsenz ist besonders dann von großem Vorteil, wenn kurzfristig gewarnt und reagiert werden muß, z. B. vor einem Torpedoangriff. Der Einsatz der erfindungsgemäßen Schleppantenne bei aktiver Ortung ist besonders vorteilhaft, da auch während der kurzen Dauer eines einzigen, von einem Ziel reflektierten Empfangsimpulses stets eine eindeutige Peilung zum Ziel mit der Schleppantenne möglich ist. Diese Forderung zu erfüllen, ist besonders wichtig, da Zeitabstände zwischen Sendeimpulsen wegen der großen Reichweiten groß sind und Empfangszeiten wegen der kurzen Pulslängen sehr kurz sind.

Der besondere Vorteil der erfindungsgemäßen Schleppantenne gegenüber solchen Verfahren, bei denen ein Kardioidensignal wie beispielsweise in der DE OS 31 51 028 gebildet wird und damit die Richtcharakteristik geformt wird, besteht darin, daß pro Wandlerort ein einziger Wandler und nicht mindestens ein Wandlerpaar vorgesehen werden muß, so daß der Aufwand der gleiche ist, wie bei einer Anordnung gemäß der DE-OS 39 10 906.

Die Wandler liegen auf einem Zylinderaußenmantel, dessen Höhe die Längsachse der Schleppantenne ist. Zwischen einer Bezugsachse senkrecht zur Längsachse und dem Querabstand des Wandlers liegt an jedem Wandlerort ein anderer Winkel, so daß die Wandler, wenn sie von Wandlerort zu Wandlerort um das gleiche Winkelinkrement versetzt angeordnet sind, sich auf einer Spirale längs des Zylinderaußenmantels befinden. Um auch bei großen Schwenkwinkeln der Hauptempfangsrichtung der Richtcharakteristik keine Fehlpeilungen aufgrund von sog. Grating-Lobes zu erhalten, muß der Abstand der Wandlerorte deutlich kleiner als die halbe Wellenlänge der höchsten zu empfangenden Frequenz sein. Mit einer solchen Anordnung der Wandler ist auch eine Kardioidenbildung möglich. Es werden dann Empfangssignale von Wandlern an zwei oder drei benachbarten Wandlerorten durch Summen- und Differenzbildung und/oder Verzögerungen zu Kardioidensignalen zusammengefaßt und mit diesen Kardioidensignalen eine schwenkbare Richtcharakteristik geformt, deren Hauptempfangsrichtung ebenfalls eindeutig zu einer Seite der Schleppantenne weist, wie es beispielsweise in der deutschen Offenlegungsschrift 31 51 028 beschrieben ist.

Eine Zusammenfassung der Empfangssignale dreier Wandler an drei Wandlerorten zu einer Achtercharakteristik und einer Rundumcharakteristik und einer anschließenden Richtungsbildung, wie es in der US-PS 41 79 682 beschrieben ist, ist ebenfalls mit der Schleppantenne nach Anspruch 1 möglich, da benachbarte Wandler jeweils einen Querabstand zur Längsrichtung und in Längsrichtung der Schleppantenne Abstände kleiner als die halbe Wellenlänge der höchsten empfangenen Frequenz aufweisen.

Der Vorteil der Schleppantenne nach Anspruch 1 besteht darin, daß sowohl eine Richtungsbildung mit den Empfangssignalen der einzelnen Wandler durch Verzögerung und Addition, wie auch nach Bilden von Kardioidensignalen oder Achtercharakteristiksignalen möglich ist, wobei jeweils jeder Wandlerort nur einen einzigen Wandler aufweist.

Gemäß der vorteilhaften Weiterbildung nach Anspruch 2 werden die Winkel für die Wandlerorte zwischen 0° und 360° statistisch ausgewählt. Der Vorteil besteht darin, daß mit der Laufzeitkompensation auf eine Bezugsebene senkrecht zur Horizontalen eine statistische Verteilung der Wandler in Längsrichtung erreicht wird und somit auch bei Abständen der Wandlerorte größer als der halben Wellenlänge der empfangenen Schallwellen eine eindeutige Peilung ohne sog. Grating-Lobes gewährleistet ist, wie es beispielsweise in der US-PS 3 811 129 für eine ebene, flächige Wandleranordnung angegeben ist. Ein weiterer Vorteil besteht darin, daß durch die statistische Auswahl der Winkel Periodizitäten des Antennenaufbaus in Längsrichtung vermieden werden, die durch eine spiralförmige Wandleranordnung entstünden. Diese würden auch zu Grating-Lobes führen.

Die gleichen Vorteile werden bei einer Anordnung der Wandler nach der Weiterbildung der erfindungsgemäßen Schleppantenne nach Anspruch 3 erzielt, die sich zusätzlich durch eine Vereinfachung der Wandleraufhängung in der Schleppantenne auszeichnet. Gibt man beispielsweise sechs Winkelpositionen mit einem Winkelabstand von 30° vor, so benötigt man nur drei verschiedene Formstücke für die Unterbringung der Wandler in der Schleppantenne, da jeweils drei Winkelpositionen symmetrisch zur Horizontalen angeordnet sind, wenn zwei Zugseile der Schleppantenne durch die Formstücke in der Horizontalen geführt sind. Solche Formstücke sind beispielsweise aus schalldurchlässigem Kunststoff, in denen die Wandler in Schaumstoff gelagert sind.

Da eine Torsion der Schleppantenne in ihrer Längsachse nicht auszuschließen ist, wird gemäß Anspruch 4 - zumindest in dem Teil der Schleppantenne, der für eine Seitenkennung verwendet wird - am Anfang und Ende ein Sensor zum Bestimmen der Verdrehung vorgesehen. Wenn alle Wandler der Schleppantenne an der Seitenkennung beteiligt sind, müssen entsprechend mehrere Sensoren vorgesehen werden.

Nach der vorteilhaften Weiterbildung der erfindungsgemäßen Schleppantenne nach Anspruch 5 und 6 werden statische Beschleunigungsaufnehmer oder Pendel eingesetzt, deren Lagesignale zusammen mit den Empfangssignalen an den Richtungsbildner übertragen werden. Der Vorteil einer Verwendung von rechtwinklig angeordneten, statischen Beschleunigungsaufnehmern zur Bestimmung der Verdrehung der Schleppantenne besteht darin, daß sie ohne spezielle Anpassung, sondern so, wie sie am Markt erhältlich sind, mittig in die Schleppantenne eingebaut werden können.

Die Erfindung ist anhand eines Ausführungsbeispiels für eine Schleppantenne mit elektroakustischen Wandlern, die in einem Querabstand zur Längsachse der Schleppantenne angeordnet sind, näher erläutert. Es zeigen:

Fig. 1     einen Abschnitt der Schleppantenne,

Fig.2     einen Querschnitt mit möglichen Einbauwinkelorten und

Fig. 3     eine Wandlerverteilung längs der Schleppantenne mit Richtungsbildner.

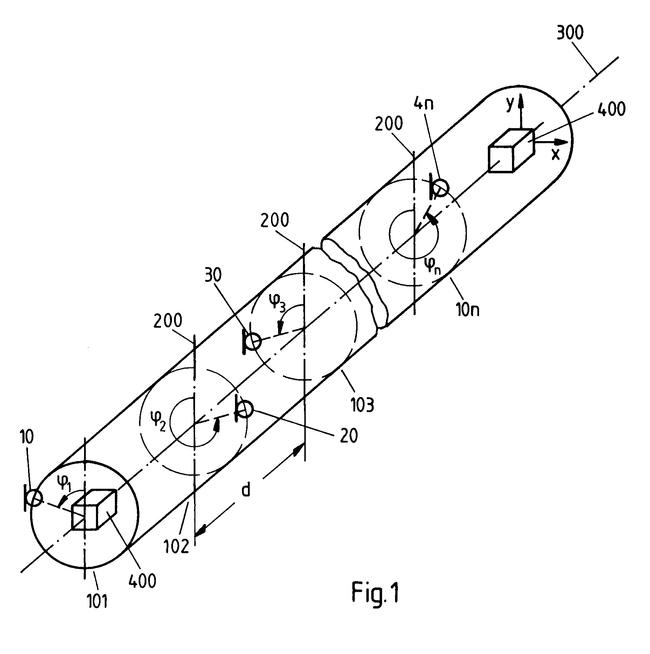

In Fig. 1 ist ein Abschnitt einer Schleppantenne dargestellt. An jedem Wandlerort 101, 102, ..., 10n befindet sich ein einziger Wandler 10, 20, 30, ... 4n unter einem Winkel $\phi_1, \phi_2, ..., \phi_n$, zu einer Bezugsachse 200. Die Winkel $\phi_n$, sind beliebig, ihre Auswahl erfolgt stochastisch. Die Bezugsachse 200 steht senkrecht zur Längsachse 300 der Schleppantenne. Auf der Längsachse 300 befinden sich zwei Sensoren 400, mit denen Neigungswinkel $\theta a$ und $\theta e$ oder Torsionswinkel um die Längsachse 300 gemessen werden. Jeder Sensor 400 enthält zwei in x- und y-Richtung ausgerichtete statische Beschleunigungsaufnehmer.

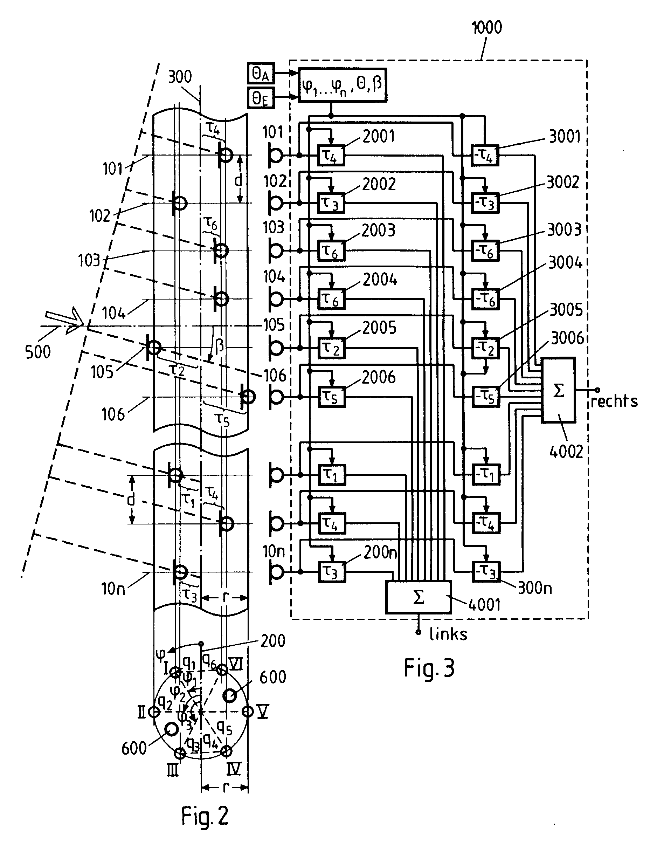

Fig. 2 zeigt einen Querschnitt der Schleppantenne mit sechs verschiedenen Winkelpositionen I, II, III, ..., VI unter den Winkel $\phi_1, \phi_2, ..., \phi_6$ für Wandler. Aus dieser beschränkten Anzahl von sechs Winkeln $\phi_1 = 30°$, $\phi_2 = 90°$, ..., $\phi_6 = 330°$ werden stochastisch die Winkelpositionen I, II, ..., VI für jeden Wandlerort 101, 102, ..., 10n ausgewählt. In den Querschnitt mit dem Radius r sind Durchführungen 600 für Zugseile angegeben. Die Winkelpositionen I, II, ..., VI liegen zu einer Verbindungslinie zwischen den Durchführungen 600 symmetrisch. Jeder Wandler, der unter einem der sechs Winkel $\phi_1, ..., \phi_6$ angeordnet werden kann, weist einen Querabstand $q_1$, $q_2, ..., q_6$ zur Bezugsachse 200 auf. Aus den Querabständen $q_1, ..., q_6$ werden Laufzeiten $\tau_1, ..., \tau_6$ einer Schallwelle bezogen auf die Längsachse 300 berechnet, die abhängig sind vom Winkel $\phi_1, ..., \phi_6$, dem Radius r und der Schallgeschwindigkeit c. Außerdem ist die Laufzeit $\tau_1, ..., \tau_6$ abhängig vom Einfallswinkel $\beta$ der Schallwelle zu einer Querachse 500. Zum Bestimmen des Einfallswinkels $\beta$ wird die Hauptempfangsrichtung einer aus den Empfangssignalen der Wandler gebildeten Richtcharakteristik in diese Richtung geschwenkt. Bei einer Torsion der Schleppantenne ist zum Berechnen der Vergrößerungszeit $\tau$ für die Empfangssignale zu dem Winkel $\phi$ der Neigungswinkel $\theta$ hinzuzuaddieren.

Für den Einfallswinkel $\beta$, in den die Hauptempfangsrichtung der Richtcharakteristik weist, werden die Laufzeiten der Schallwelle durch Verzögerungszeiten

$$\tau_n = \frac{r \cdot \sin\phi_n}{c \cdot \cos\beta}$$

bei einem Neigungswinkel $\theta = 0$ kompensiert, die in einem Richtungsbildner 1000 eingestellt werden. Der Richtungsbildner 1000 und eine Schleppantenne, die eine statistische Wandlerverteilung aus sechs verschieden möglichen Einbauorten gemäß Fig. 2 auf einem Zylinderaußenmantel mit einer Längsachse 300 und einem Radius r aufweist, ist in Fig. 3 gezeigt. Schallwellen fallen unter dem Einfallswinkel $\beta$ links von der Längsrichtung 300 ein und werden mit der Richtcharakteristik, die aus den Empfangssignalen der Wandler im Richtungsbildner 1000 gebildet wird und in die Hauptempfangsrichtung $\beta$ weist, ausgewertet. Dazu sind in Verzögerungsstufen 2001, 2002 bis 200n abhängig von der Winkelposition I, II, ..., des Wandlers am Wandlerort 101, 102, ..., 10n Verzögerungszeiten

$$\tau_1 = \frac{r \cdot \sin\varphi_1}{c \cdot \cos\beta}$$

$$\tau_2 = \frac{r}{c \cdot \cos\beta}$$

$$\tau_3 = \frac{r \cdot \sin(180° - \varphi_3)}{c \cdot \cos\beta}$$

$$\tau_4 = \frac{r \cdot \sin-(\varphi_4 - 180°)}{c \cdot \cos\beta}$$

$$\tau_5 = \frac{r}{c \cdot \cos\beta}$$

$$\tau_6 = \frac{r \cdot \sin(360° - \varphi_6)}{c \cdot \cos\beta} = \frac{r \cdot \sin(-\varphi_1)}{c \cdot \cos\beta}$$

eingestellt. Die gleichen Laufzeiten mit negativen Vorzeichen werden als Verzögerungszeiten $-\tau_n$ in Verzögerungsstufen 3001, 3002, ..., 30n eingestellt. Den Verzögerungsstufen 2001, ..., 200n ist eine Summationsschaltung 3001 nachgeordnet, in der eine nach links weisende Richtcharakteristik gebildet wird. In einer Summationsstufe 4002 wird eine nach rechts weisende Richtcharakteristik gebildet, die den gleichen Einfallswinkel $\beta$ zu der Querachse 500 aufweist.

In dem Fall, in dem die Hauptempfangsrichtung der Richtcharakteristik in Richtung zum Schallwellen abstrahlenden oder reflektierenden Ziel weist, sind die Empfangssignale durch die Verzögerung konphas und addieren sich zu einem Gruppensignal am Ausgang der Summationsstufe 4001, das wesentlich größer ist als das Gruppensignal, dessen Richtcharakteristik zur anderen Seite der Schleppantenne weist und das am Ausgang der anderen Summationsstufe 4002 ansteht.

**Patentansprüche**

1. Schleppantenne mit elektroakustischen Wandlern in einem Querabstand zu ihrer Längsachse, dadurch gekennzeichnet, daß an jedem Wandlerort (101, 102, ..., 10n) ein Wandler (10, 20, ...) mit Querabstand (q) unter einem Winkel ($\phi$) zu einer Bezugsachse (200) senkrecht zur Längsachse (300) angeordnet ist und daß der Winkel ($\phi_1$, $\phi_2$, ...) von Wandlerort (101) zu Wandlerort (102) unterschiedlich ist.

2. Schleppantenne nach Anspruch 1, dadurch gekennzeichnet, daß der Winkel ($\phi$) für jeden Wandlerort (101, 102, ...) statistisch ausgewählt ist.

3. Schleppantenne nach Anspruch 2, dadurch gekennzeichnet, daß mehrere vorgebbare Winkelpositionen (I, II, ..., VI) für die Auswahl vorgesehen sind.

4. Schleppantenne nach einem der Ansprüche 1 bis 3, dadurch gekennzeichnet, daß mindestens zwei Sensoren (400) zum Bestimmen ihrer Verdrehung ($\theta$) in einem Abstand in Längsrichtung (300) angeordnet sind.

5. Schleppantenne nach Anspruch 4, dadurch gekennzeichnet, daß der Sensor (400) ein Pendel aufweist.

6. Schleppantenne nach Anspruch 4, dadurch gekennzeichnet, daß der Sensor (400) zwei senkrecht zueinander angeordnete statische Beschleunigungsaufnehmer aufweist.

Fig.1

Fig. 2

Fig. 3